# EUROPEAN PATENT APPLICATION

(11) **EP 4 496 243 A1**
(43) Date of publication of application: **22.01.2025**
(21) Application number: 22931465.3
(22) Date of filing: 18.03.2022
(51) Int. Cl.: H04L 1/00

(54) **CHANNEL ESTIMATION METHOD, APPARATUS AND DEVICE, AND STORAGE MEDIUM**

(71) Applicant: Beijing Xiaomi Mobile Software Co., Ltd., Beijing 100085 (CN)
(72) Inventor: CHI, Liangang, Beijing 100085 (CN)
(74) Representative: Dehns Germany Partnerschaft mbB
(86) International application number: PCT/CN2022/081804
(87) International publication number: WO 2023/173434

(57) **Abstract**

The present disclosure belongs to the technical field of communications. Provided are a channel estimation method, apparatus and device, and a storage medium. The method comprises: determining configuration information, wherein the configuration information comprises a reference signal mode supported by a UE, and/or, reference signal configuration information of at least one reference signal corresponding to the reference signal mode supported by the UE; sending an indication message to the UE, wherein the indication message is used for indicating a reference signal mode, and/or, for indicating reference signal configuration information of at least one reference signal corresponding to a reference signal mode indicated by a network device; acquiring a reference signal sent by the UE; and executing, on the basis of the reference signal, an operation corresponding to the reference signal mode indicated by the network device, so as to perform channel estimation. The present disclosure provides a channel estimation method based on AI and/or ML, which can improve the channel estimation performance and ensure the accuracy and precision of channel estimation.

## Description

### TECHNICAL FIELD

The present disclosure relates to the technical field of communication, and particularly, to a channel estimation method/apparatus/device and a storage medium.

### BACKGROUND

With the continuous development of Artificial Intelligent (AI) technology and Machine Learning (ML) technology, the application fields of AI technology and ML technology (such as image recognition, speech processing, natural language processing, games, etc.) are becoming more and more extensive. Based on this, the present disclosure provides a channel estimation method based on AI and/or ML to improve the channel estimation performance.

### SUMMARY

The channel estimation methods/apparatuses/devices and storage mediums provided in the present disclosure implement channel estimation based on AI and/or ML, which can improve the channel estimation performance.

A channel estimation method provided in an embodiment of an aspect of the present disclosure is performed by a network device for uplink channel estimation, and the method includes:
determining configuration information, where the configuration information includes a reference signal mode supported by a UE, and/or, reference signal configuration information of at least one type of reference signal corresponding to the reference signal mode supported by the UE;
sending an indication message to the UE, where the indication message is used to indicate a reference signal mode, and/or, is used to indicate reference signal configuration information of at least one type of reference signal corresponding to the reference signal mode indicated by the network device;
obtaining a reference signal sent by the UE; and
performing, based on the reference signal, an operation corresponding to the reference signal mode indicated by the network device to perform channel estimation.

Optionally, in an embodiment of the present disclosure, the reference signal mode includes at least one of:
a reference signal mode 1, where a reference signal corresponding to the reference signal mode 1 is used to train an artificial intelligence (AI) model and/or to train a machine learning (ML) model, where the AI model is used to implement channel estimation based on the reference signal, and the ML model is also used to implement channel estimation based on the reference signal; and
a reference signal mode 2, where a function of a reference signal corresponding to the reference signal mode 2 includes at least one of being used for training the AI model, for training the ML model, for evaluating the AI model, for evaluating the ML model, for performing channel estimation based on the AI model, and for performing channel estimation based on the ML model.

Optionally, in an embodiment of the present disclosure, the reference signal configuration information includes at least one of:
a reference signal pattern of the reference signal; and
a reference signal sequence of the reference signal.

Optionally, in an embodiment of the present disclosure, a method for determining the configuration information includes at least one of:
determining the configuration information based on a protocol; and
obtaining supported configuration information sent by the UE.

Optionally, in an embodiment of the present disclosure, sending the indication message to the UE includes:
sending the indication message to the UE through a signaling.

Optionally, in an embodiment of the present disclosure, the indication message includes at least one of:
first indication information used to indicate the reference signal mode indicated by the network device;
second indication information used to indicate the reference signal configuration information corresponding to the reference signal mode indicated by the network device; and
a time domain position corresponding to the reference signal configuration information indicated by the network device.

Optionally, in an embodiment of the present disclosure, the indication message includes at least one of:
first indication information used to indicate the reference signal mode indicated by the network device;
second indication information used to indicate the reference signal configuration information corresponding to the reference signal mode indicated by the network device;
a configuration period of the UE for the configuration information;
a first time domain position of the reference signal configuration information corresponding to the reference signal mode 1 within the configuration period; and
a second time domain position of the reference signal configuration information corresponding to the reference signal mode 2 within the configuration period.

Optionally, in an embodiment of the present disclosure, performing, based on the reference signal, the operation corresponding to the reference signal mode indicated by the network device includes:
when the reference signal mode indicated by the network device is the reference signal mode 1, the corresponding operation including: the network device training the AI model based on the reference signal, and/or, the network device training the ML model based on the reference signal;
when the reference signal mode indicated by the network device is the reference signal mode 2, the corresponding operation including at least one of:
the network device training the AI model based on the reference signal;
the network device training the ML model based on the reference signal;
the network device performing channel estimation based on the reference signal and the AI model;
the network device performing channel estimation based on the reference signal and the ML model;
the network device evaluating the AI model based on the reference signal; and
the network device evaluating the ML model based on the reference signal.

A channel estimation method provided in an embodiment of another aspect of the present disclosure is performed by a UE for uplink channel estimation, and the method includes:
sending configuration information to a network device, where the configuration information includes a reference signal mode supported by the UE, and/or, reference signal configuration information of at least one type of reference signal corresponding to the reference signal mode supported by the UE;
obtaining an indication message sent by the network device, where the indication message is used to indicate a reference signal mode, and/or, is used to indicate reference signal configuration information of at least one type of reference signal corresponding to the reference signal mode indicated by the network device; and
sending a reference signal to the network device based on the indication message.

Optionally, in an embodiment of the present disclosure, the reference signal mode includes at least one of:
reference signal mode 1, where a reference signal corresponding to the reference signal mode 1 is used to train an AI model and/or to train an ML model, where the AI model is used to implement channel estimation based on the reference signal, and the ML model is also used to implement channel estimation based on the reference signal; and
reference signal mode 2, where a function of a reference signal corresponding to the reference signal mode 2 includes at least one of being used for training the AI model, for training the ML model, for evaluating the AI model, for evaluating the ML model, for performing channel estimation based on the AI model, and for performing channel estimation based on the ML model.

Optionally, in an embodiment of the present disclosure, the reference signal configuration information includes at least one of:
a reference signal pattern of the reference signal; and
a reference signal sequence of the reference signal.

Optionally, in an embodiment of the present disclosure, obtaining the indication message sent by the network device includes:
obtaining the indication message sent by the network device through a signaling.

Optionally, in an embodiment of the present disclosure, the indication message includes at least one of:
first indication information used to indicate the reference signal mode indicated by the network device;
second indication information used to indicate the reference signal configuration information corresponding to the reference signal mode indicated by the network device; and
a time domain position corresponding to the reference signal configuration information indicated by the network device.

Optionally, in an embodiment of the present disclosure, sending the reference signal to the network device based on the indication message includes:
sending the reference signal to the network device at the time domain position based on the reference signal mode corresponding to the first indication information and/or the reference signal configuration information corresponding to the second indication information.

Optionally, in an embodiment of the present disclosure, the indication message includes at least one of:
first indication information used to indicate the reference signal mode indicated by the network device;
second indication information used to indicate the reference signal configuration information corresponding to the reference signal mode indicated by the network device;
a configuration period of the network device for the configuration information;
a first time domain position of the reference signal configuration information corresponding to the reference signal mode 1 within the configuration period; and
a second time domain position of the reference signal configuration information corresponding to the reference signal mode 2 within the configuration period.

Optionally, in an embodiment of the present disclosure, sending the reference signal to the network device based on the indication message includes:
sending the reference signal to the network device periodically according to the first time domain position, the second time domain position, and the configuration period.

A channel estimation apparatus provided in another aspect of the present disclosure includes:
a determination module, configured to determine configuration information, where the configuration information includes a reference signal mode supported by a UE, and/or, reference signal configuration information of at least one type of reference signal corresponding to the reference signal mode supported by the UE;
a sending module, configured to send an indication message to the UE, where the indication message is used to indicate a reference signal mode, and/or, is used to indicate reference signal configuration information of at least one type of reference signal corresponding to the reference signal mode indicated by the network device;
an obtaining module, configured to obtain a reference signal sent by the UE; and
a processing module, configured to perform an operation corresponding to the reference signal mode indicated by the network device based on the reference signal to perform channel estimation.

A channel estimation apparatus provided in another aspect of the present disclosure includes:
a first sending module, configured to send configuration information to a network device, where the configuration information includes a reference signal mode supported by the UE, and/or, reference signal configuration information of at least one type of reference signal corresponding to the reference signal mode supported by the UE;
an obtaining module, configured to obtain an indication message sent by the network device, where the indication message is used to indicate a reference signal mode, and/or, is used to indicate reference signal configuration information of at least one type of reference signal corresponding to the reference signal mode indicated by the network device; and
a second sending module, configured to send a reference signal to the network device based on the indication message.

An embodiment of another aspect of the present disclosure provides a communication apparatus, which includes a processor and a memory, where a computer program is stored in the memory and the processor executes the computer program stored in the memory so that the apparatus performs the method provided in the above embodiment of one aspect.

An embodiment of another aspect of the present disclosure provides a communication apparatus, which includes a processor and a memory, where a computer program is stored in the memory and the processor executes the computer program stored in the memory so that the apparatus performs the method provided in the above embodiment of another aspect.

A communication apparatus provided in another aspect of the present disclosure includes: a processor and an interface circuit;
the interface circuit is configured to receive code instructions and transmit the code instructions to the processor; and
the processor is configured to run the code instructions to perform the method provided in the above embodiment of one aspect.

A communication apparatus provided in another aspect of the present disclosure includes: a processor and an interface circuit;
the interface circuit is configured to receive code instructions and transmit the code instructions to the processor; and
the processor is configured to run the code instructions to perform the method provided in the above embodiment of another aspect.

A computer readable storage medium provided in yet another aspect of the present disclosure is used to store instructions, and when the instructions are executed, the method provided in the above embodiment of one aspect is implemented.

A computer readable storage medium provided in yet another aspect of the present disclosure is used to store instructions, and when the instructions are executed, the method provided in the above embodiment of another aspect is implemented.

In summary, in the channel estimation methods/apparatuses/devices and storage mediums provided in the embodiments of the present disclosure, the network device may first determine configuration information, the configuration information including a reference signal mode supported by the UE, and/or, reference signal configuration information of at least one type of reference signal corresponding to the reference signal mode supported by the UE; and the network device may send an indication message to the UE, the indication message being used to indicate the reference signal mode, and/or, being used to indicate the reference signal configuration information of at least one type of reference signal corresponding to the reference signal mode indicated by the UE; thereafter, the network device may obtain a reference signal sent by the UE; and may perform an operation corresponding to the reference signal mode indicated by the network device based on the reference signal to perform channel estimation. Therefore, the embodiments of the present disclosure provide a channel estimation method based on AI and/or ML, which can improve the channel estimation performance and ensure the accuracy and precision of the channel estimation.

### BRIEF DESCRIPTION OF THE DRAWINGS

The foregoing and/or additional aspects and advantages of the present disclosure will become apparent and readily understood from the following description of the embodiments with reference to the accompanying drawings, in which:
FIG. 1 is a schematic flow chart of a channel estimation method provided by an embodiment of the present disclosure;
FIG. 2 is a schematic flow chart of a channel estimation method provided by another embodiment of the present disclosure;
FIG. 3 is a schematic diagram of a structure of a channel estimation apparatus provided by an embodiment of the present disclosure;
FIG. 4 is a schematic diagram of a structure of a channel estimation apparatus provided by another embodiment of the present disclosure;
FIG. 5 is a block diagram of a terminal device provided by an embodiment of the present disclosure; and
FIG. 6 is a block diagram of a network side device provided by an embodiment of the present disclosure.

### DETAILED DESCRIPTION

Exemplary embodiments will be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. Instead, they are merely examples of apparatuses and methods that are consistent with some aspects of the embodiments of the present disclosure as detailed in the appended claims.

Terms used in the embodiments of the present disclosure are used solely for the purpose of describing certain embodiments and are not intended to limit the embodiments of the present disclosure. The singular forms of "a/an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if' and "provided that" as used herein may be interpreted as "when..." or "in the case..." or "in response to determination".

The channel estimation methods/apparatuses/devices and storage mediums provided by the embodiments of the present disclosure are described in detail below with reference to the accompanying drawings.

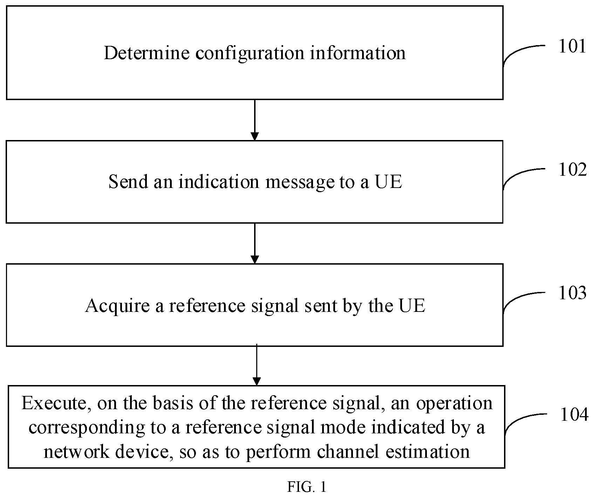

FIG. 1 is a schematic flow chart of a channel estimation method provided by an embodiment of the present disclosure. The method is performed by a network device and may be used to perform uplink channel estimation. As shown in FIG. 1, the method may include the following steps.

In step 101, configuration information is determined.

In an embodiment of the present disclosure, the above configuration information may specifically include at least one of the following:
a reference signal mode supported by a User Equipment (UE, terminal device);
reference signal configuration information of at least one type of reference signal corresponding to the reference signal mode supported by the UE.

It should be noted that, in an embodiment of the present disclosure, UE may refer to a device that provides voice and/or data connectivity to a user. The terminal device may communicate with one or more core networks via Radio Access Network (RAN). The UE may be an IoT terminal, such as a sensor device, a mobile phone (or a "cellular" phone), and a computer with an IoT terminal, for example, it may be a fixed, portable, pocket-sized, handheld, computer-built-in, or vehicle-mounted apparatus, e.g., a station (STA), a subscriber unit, a subscriber station, a mobile station, a mobile, a remote station, an access point, a remote terminal, an access terminal, a user apparatus (user terminal) or a user agent. Alternatively, the UE may be a device of an unmanned aerial vehicle. Alternatively, the UE may be a vehicle-mounted device, for example, a trip computer with a wireless communication function, or a wireless terminal externally connected to a trip computer. Alternatively, the UE may be a roadside device, for example, a street lamp, a signal lamp, or other roadside device with a wireless communication function.

Further, in an embodiment of the present disclosure, the above-mentioned reference signal mode may include at least one of the following:
a reference signal mode 1, where a reference signal corresponding to the reference signal mode 1 is used to train an AI model and/or to train an ML model, and in an embodiment of the present disclosure, the AI model may be used to implement channel estimation based on the reference signal, and the ML model may be used to implement channel estimation based on the reference signal;
a reference signal mode 2, a function of a reference signal corresponding to the reference signal mode 2 may include at least one of being used for training the AI model, for training the ML model, for evaluating the AI model, for evaluating the ML model, for performing channel estimation based on the AI model, and for performing channel estimation based on the ML model.

In an embodiment of the present disclosure, the reference signal configuration information of the reference signal may include at least one of the following:
a reference signal pattern of the reference signal; and
a reference signal sequence of the reference signal.

In addition, in an embodiment of the present disclosure, a method for determining the configuration information may include at least one of the following:
determining the configuration information based on a protocol; and
obtaining the configuration information sent by the UE.

In step 102, an indication message is sent to the UE.

In an embodiment of the present disclosure, the indication message may be used to indicate a reference signal mode, and/or to indicate reference signal configuration information of at least one type of reference signal corresponding to the reference signal mode indicated by the UE.

In an embodiment of the present disclosure, the network device may specifically send the indication message to the UE via signaling. Specifically, in an embodiment of the present disclosure, the network device may send the indication message to the UE via dynamic signaling. In another embodiment of the present disclosure, the network device may also send the indication message to the UE via semi-static signaling.

It should be noted that, in an embodiment of the present disclosure, the indication message sent by the network device to the UE via signaling may be used for: informing, by the network device, the UE of a specific reference signal mode to be indicated, and/or, reference signal configuration information to be indicated by the network device. Based on this, in an embodiment of the present disclosure, the indication message sent by the network device to the UE via signaling may include at least one of the following:

first indication information used to indicate the reference signal mode indicated by the network device;
second indication information used to indicate the reference signal configuration information corresponding to the reference signal mode indicated by the network device; and
a time domain position corresponding to the reference signal configuration information indicated by the network device.

It should be noted that, in an embodiment of the present disclosure, the first indication information may be, for example, a mode number of the reference signal mode. For example, when the reference signal mode indicated by the network device is the reference signal mode 1, the first indication information may be an indication code "1". In an embodiment of the present disclosure, an indication code may be allocated in advance to each type of reference signal configuration information for each reference signal mode, and the second indication information may be the indication code of the reference signal configuration information indicated by the network device.

Further, in an embodiment of the present disclosure, the reference signal mode indicated by the network device in the above indication message may be specifically selected by the network device from the reference signal mode(s) supported by the UE in the above configuration information. In an embodiment of the present disclosure, the criterion for the network device to specifically select which reference signal mode to indicate may be as follows: selecting a corresponding reference signal mode to indicate based on the current demand of the network device.

Specifically, in an embodiment of the present disclosure, when the current demand of the network device is the need to train the AI model, and/or the need to train the ML model, the network device may indicate the reference signal mode 1 or the reference signal mode 2 to the UE, where the need to train the AI model and/or the ML model may be understood as the need to train the newly established AI model and/or the ML model, or the need to retrain the trained AI model and/or the trained ML model. For example, when the UE moves too fast, the current AI model and/or ML model cannot meet accuracy of the current channel estimation. In this case, the current AI model and/or ML model needs to be retrained.

Furthermore, in another embodiment of the present disclosure, when the current demand of the network device is any one of the need to evaluate the AI model, the need to evaluate the ML model, the need to perform channel estimation based on the AI model, and the need to perform channel estimation based on the ML model, the network device may indicate the reference signal mode 2 to the UE.

In an embodiment of the present disclosure, each reference signal mode may correspond to at least one type of reference signal, and each type of reference signal corresponds to one type of reference signal configuration information. After determining the reference signal mode to be indicated to the UE, the network device may further determine at least one type of reference signal configuration information to be indicated from all types of reference signal configuration information corresponding to the reference signal mode. In an embodiment of the present disclosure, the network device may determine which specific type of reference signal configuration information of the reference signal mode to be indicated based on information such as the moving speed of the UE. Specifically, in an embodiment of the present disclosure, when the UE's moving speed is relatively large, the network device may indicate to the UE the reference signal configuration information of a relatively dense reference signal among all reference signals corresponding to the reference signal mode. When the UE's moving speed is relatively small, the network device may indicate to the UE the reference signal configuration information of a relatively sparse reference signal among all reference signals corresponding to the reference signal mode.

Furthermore, in an embodiment of the present disclosure, the above-mentioned time domain position corresponding to the reference signal configuration information indicated by the network device may specifically be the time domain position when the reference signal configuration information indicated by the network device is transmitted.

Further, in another embodiment of the present disclosure, the indication message sent by the network device to the UE through signaling may be used for: indicating, by the network device, to the UE the time for sending the reference signal configuration information of each reference signal mode. Based on this, in an embodiment of the present disclosure, the indication message sent by the network device to the UE via signaling may include at least one of the following:
first indication information used to indicate the reference signal mode indicated by the network device;
second indication information used to indicate the reference signal configuration information corresponding to the reference signal mode indicated by the network device;
a configuration period of the network device for the configuration information;
a first time domain position of the reference signal configuration information corresponding to the reference signal mode 1 within the configuration period; and
a second time domain position of the reference signal configuration information corresponding to the reference signal mode 2 within the configuration period.

In an embodiment of the present disclosure, the above-mentioned first time domain position may be a time domain position at which the reference signal configuration information of the reference signal mode 1 requested by the UE is transmitted during the configuration period, for example, the first time domain position may be the first half of the slots of the configuration period; the above-mentioned second time domain position may be the time domain position of the reference signal configuration information of the reference signal mode 2 requested by the UE during the configuration period, for example, the second time domain position may be the second half of the slots of the configuration period.

In step 103, a reference signal sent by the UE is obtained.

In an embodiment of the present disclosure, the reference signal may be sent by the UE based on the reference signal mode and/or the reference signal configuration information indicated in the indication message sent by the network device.

Specifically, in an embodiment of the present disclosure, when the above-mentioned indication message in the step 102 includes the first indication information for indicating that the reference signal mode indicated by the network device is the reference signal mode 1, second indication information for indicating a first type of reference signal configuration information corresponding to the reference signal mode 1 indicated by the network device, and the time domain position corresponding to the reference signal configuration information indicated by the network device, it means that the network device indicates to the UE the reference signal mode 1 and the first type of reference signal configuration information of the reference signal mode 1, and expects the UE to send a first type of reference signal of the reference signal mode 1 to the network device based on the first type of reference signal configuration information of the reference signal mode 1 at the time domain position indicated by the network device. In this case, the UE may directly send, based on the indication message, the first type of reference signal of the reference signal mode 1 to the network device based on the first type of reference signal configuration information of the reference signal mode 1 at the time domain position indicated by the network device.

Alternatively, in an embodiment of the present disclosure, when the above-mentioned indication message in the step 102 includes the first indication information for indicating that the reference signal mode indicated by the network device is the reference signal mode 1, second indication information for indicating a first type of reference signal configuration information corresponding to the reference signal mode 1 indicated by the network device, the configuration period of the network device for the configuration information, the first time domain position of the reference signal configuration information corresponding to the reference signal mode 1 within the configuration period, and the second time domain position of the reference signal configuration information corresponding to the reference signal mode 2 within the configuration period, it means that the network device indicates to the UE the first type of reference signal of the reference mode 1, then the UE may directly send the first type of reference signal of the reference mode 1 to the network device periodically based on the configuration period in the indication message, and, at each time the first type of reference signal of the reference mode 1 is sent to the network device, the first type of reference signal of the reference mode 1 may be sent to the network device at the first time domain position of the configuration period based on the first type of reference signal configuration information corresponding to the reference signal mode 1 indicated by the network device.

In step 104, an operation corresponding to the reference signal mode indicated by the network device is performed based on the reference signal to perform channel estimation.

Specifically, in an embodiment of the present disclosure, the above-mentioned performing the operation corresponding to the reference signal mode indicated by the network device based on the reference signal may include:
when the reference signal mode indicated by the network device is the reference signal mode 1, the corresponding operation performed by the network device may include at least one of the following:
the network device training the AI model based on the reference signal so that channel estimation may be performed subsequently based on the trained AI model; and
the network device training the ML model based on the reference signal so that channel estimation may be performed subsequently based on the trained ML model.

When the reference signal mode indicated by the network device is the reference signal mode 2, the corresponding operation performed by the network device may include at least one of the following:
the network device training the AI model based on the reference signal so that channel estimation may be performed subsequently based on the trained AI model;
the network device training the ML model based on the reference signal so that channel estimation may be performed subsequently based on the trained ML model;
the network device performing channel estimation based on the reference signal and the AI model;
the network device performing channel estimation based on the reference signal and the ML model;
the network device evaluating the AI model based on the reference signal (for example, the accuracy of the AI model may be evaluated) to ensure the accuracy of the AI model, thereby ensuring the accuracy of channel estimation performed subsequently based on the AI model;
the network device evaluating the ML model based on the reference signal (for example, the accuracy of the ML model may be evaluated) to ensure the accuracy of the ML model, thereby ensuring the accuracy of channel estimation performed subsequently based on the ML model.

In an embodiment of the present disclosure, the above-mentioned performing, by the network device, channel estimation based on the reference signal and the AI model may specifically include: inputting relevant information of the reference signal into the trained AI model, then the AI model may output a channel estimation result. The method for performing, by the network device, the above-mentioned channel estimation based on the reference signal and the ML model is similar, and will not be repeated in the embodiments of the present disclosure.

In summary, in the channel estimation method provided in the embodiments of the present disclosure, the network device may first determine configuration information, the configuration information including a reference signal mode supported by the UE, and/or, reference signal configuration information of at least one type of reference signal corresponding to the reference signal mode supported by the UE; and the network device may send an indication message to the UE, the indication message being used to indicate the reference signal mode, and/or, being used to indicate the reference signal configuration information of at least one type of reference signal corresponding to the reference signal mode indicated by the UE; thereafter, the network device may obtain a reference signal sent by the UE; and may perform an operation corresponding to the reference signal mode indicated by the network device based on the reference signal to perform channel estimation. Therefore, the embodiments of the present disclosure provide a channel estimation method based on AI and/or ML, which can improve the channel estimation performance and ensure the accuracy and precision of the channel estimation.

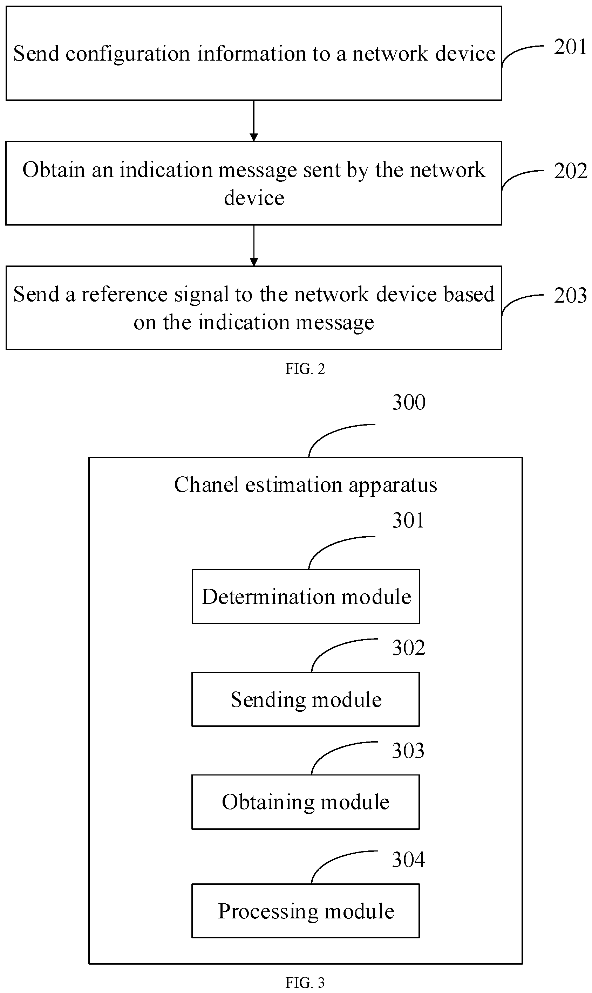

FIG. 2 is a schematic flow chart of a channel estimation method provided by an embodiment of the present disclosure. The method is performed by a UE and may be used for performing uplink channel estimation. As shown in FIG. 2, the method may include the following steps.

In step 201, configuration information is sent to a network device.

In an embodiment of the present disclosure, the configuration information may include a reference signal mode supported by the UE, and/or, reference signal configuration information of at least one type of reference signal corresponding to the reference signal mode supported by the UE.

In step 202, an indication message sent by the network device is obtained.

In an embodiment of the present disclosure, the indication message is used to indicate a reference signal mode, and/or, to indicate reference signal configuration information of at least one type of reference signal corresponding to the reference signal mode indicated by the network device.

The detailed description of the steps 201-202 may be referred to the description of the above embodiments, and will not be repeated in the embodiment of the present disclosure herein.

In step 203: a reference signal is sent to the network device based on the indication message.

In an embodiment of the present disclosure, the reference signal may be sent by the UE based on the reference signal mode and/or reference signal configuration information indicated in the indication message sent by the network device.

Specifically, in an embodiment of the present disclosure, when the indication message includes the first indication information for indicating that the reference signal mode indicated by the network device is the reference signal mode 1, second indication information for indicating a first type of reference signal configuration information corresponding to the reference signal mode 1 indicated by the network device, and the time domain position corresponding to the reference signal configuration information indicated by the network device, it means that the network device indicates to the UE the reference signal mode 1 and the first type of reference signal configuration information of the reference signal mode 1, and expects the UE to send a first type of reference signal of the reference signal mode 1 to the network device based on the first type of reference signal configuration information of the reference signal mode 1 at the time domain position indicated by the network device. At this time, the UE may directly send, based on the indication message, the first type of reference signal of the reference signal mode 1 to the network device based on the first type of reference signal configuration information of the reference signal mode 1 at the time domain position indicated by the network device.

Alternatively, in an embodiment of the present disclosure, when the indication message includes the first indication information for indicating that the reference signal mode indicated by the network device is the reference signal mode 1, second indication information for indicating a first type of reference signal configuration information corresponding to the reference signal mode 1 indicated by the network device, the configuration period of the network device for the configuration information, the first time domain position of the reference signal configuration information corresponding to the reference signal mode 1 within the configuration period, and the second time domain position of the reference signal configuration information corresponding to the reference signal mode 2 within the configuration period, it means that the network device indicates to the UE the first type of reference signal of the reference mode 1, then the UE may directly send the first type of reference signal of the reference mode 1 to the network device periodically based on the configuration period in the indication message, and, at each time the first type of reference signal of the reference mode 1 is sent to the network device, the first type of reference signal of the reference mode 1 may be sent to the network device at the first time domain position of the configuration period based on the first type of reference signal configuration information corresponding to the reference signal mode 1 indicated by the network device.

In summary, in the channel estimation method provided in the embodiments of the present disclosure, the network device may first determine configuration information, the configuration information including a reference signal mode supported by the UE, and/or, reference signal configuration information of at least one type of reference signal corresponding to the reference signal mode supported by the UE; and the network device may send an indication message to the UE, the indication message being used to indicate the reference signal mode, and/or, being used to indicate the reference signal configuration information of at least one type of reference signal corresponding to the reference signal mode indicated by the UE; thereafter, the network device may obtain a reference signal sent by the UE; and may perform an operation corresponding to the reference signal mode indicated by the network device based on the reference signal to perform channel estimation. Therefore, the embodiments of the present disclosure provide a channel estimation method based on AI and/or ML, which can improve the channel estimation performance and ensure the accuracy and precision of the channel estimation.

FIG. 3 is a schematic diagram of a structure of a channel estimation apparatus provided by an embodiment of the present disclosure. As shown in FIG. 3, the apparatus may include:
a determination module, configured to determine configuration information, where the configuration information includes a reference signal mode supported by a UE, and/or, reference signal configuration information of at least one type of reference signal corresponding to the reference signal mode supported by the UE;
a sending module, configured to send an indication message to the UE, where the indication message is used to indicate a reference signal mode, and/or, is used to indicate reference signal configuration information of at least one type of reference signal corresponding to the reference signal mode indicated by the network device;
an obtaining module, configured to obtain a reference signal sent by the UE; and
a processing module, configured to perform an operation corresponding to the reference signal mode indicated by the network device based on the reference signal to perform channel estimation.

In summary, in the channel estimation apparatus provided in the embodiment of the present disclosure, the network device may first determine configuration information, the configuration information including a reference signal mode supported by the UE, and/or, reference signal configuration information of at least one type of reference signal corresponding to the reference signal mode supported by the UE; and the network device may send an indication message to the UE, the indication message being used to indicate the reference signal mode, and/or, being used to indicate the reference signal configuration information of at least one type of reference signal corresponding to the reference signal mode indicated by the UE; thereafter, the network device may obtain a reference signal sent by the UE; and may perform an operation corresponding to the reference signal mode indicated by the network device based on the reference signal to perform channel estimation. Therefore, the embodiments of the present disclosure provide a channel estimation method based on AI and/or ML, which can improve the channel estimation performance and ensure the accuracy and precision of the channel estimation.

Optionally, in an embodiment of the present disclosure, the reference signal mode includes at least one of the following:
a reference signal mode 1, where a reference signal corresponding to the reference signal mode 1 is used to train an artificial intelligence (AI) model and/or to train a machine learning (ML) model, where the AI model is used to implement channel estimation based on the reference signal, and the ML model is also used to implement channel estimation based on the reference signal; and
a reference signal mode 2, where a function of a reference signal corresponding to the reference signal mode 2 includes at least one of being used for training the AI model, for training the ML model, for evaluating the AI model, for evaluating the ML model, for performing channel estimation based on the AI model, and for performing channel estimation based on the ML model.

Optionally, in an embodiment of the present disclosure, the reference signal configuration information includes at least one of the following:
a reference signal pattern of the reference signal; and
a reference signal sequence of the reference signal.

Optionally, in an embodiment of the present disclosure, the determination module is further configured to:
determine the configuration information based on a protocol; and
obtain supported configuration information sent by the UE.

Optionally, in an embodiment of the present disclosure, the sending module is further configured to:
send the indication message through signaling.

Optionally, in an embodiment of the present disclosure, the indication message includes at least one of the following:
first indication information used to indicate the reference signal mode indicated by the network device;
second indication information used to indicate the reference signal configuration information corresponding to the reference signal mode indicated by the network device; and
a time domain position corresponding to the reference signal configuration information indicated by the network device.

Optionally, in an embodiment of the present disclosure, the indication message includes at least one of the following:
first indication information used to indicate the reference signal mode indicated by the network device;
second indication information used to indicate the reference signal configuration information corresponding to the reference signal mode indicated by the network device;
a configuration period of the UE for the configuration information;
a first time domain position of the reference signal configuration information corresponding to the reference signal mode 1 within the configuration period; and
a second time domain position of the reference signal configuration information corresponding to the reference signal mode 2 within the configuration period.

Optionally, in an embodiment of the present disclosure, the processing module is further configured to:
when the reference signal mode indicated by the network device is the reference signal mode 1, the corresponding operation includes: the network device training the AI model based on the reference signal, and/or, the network device training the ML model based on the reference signal;
when the reference signal mode indicated by the network device is the reference signal mode 2, the corresponding operation includes at least one of the following:
the network device training the AI model based on the reference signal;
the network device training the ML model based on the reference signal;
the network device performing channel estimation based on the reference signal and the AI model;
the network device performing channel estimation based on the reference signal and the ML model;
the network device evaluating the AI model based on the reference signal; and
the network device evaluating the ML model based on the reference signal.

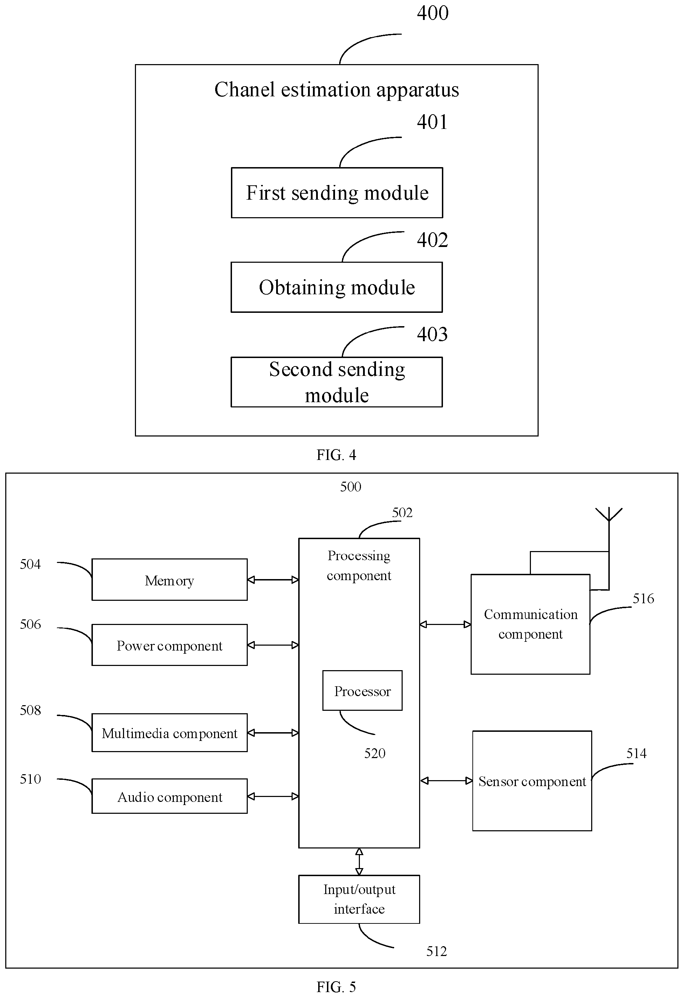

FIG. 4 is a schematic diagram of a structure of a channel estimation apparatus provided by an embodiment of the present disclosure. As shown in FIG. 4, the apparatus may include:
a first sending module, configured to send configuration information to a network device, where the configuration information includes a reference signal mode supported by the UE, and/or, reference signal configuration information of at least one type of reference signal corresponding to the reference signal mode supported by the UE;
an obtaining module, configured to obtain an indication message sent by the network device, where the indication message is used to indicate a reference signal mode, and/or, is used to indicate reference signal configuration information of at least one type of reference signal corresponding to the reference signal mode indicated by the network device; and
a second sending module, configured to send a reference signal to the network device based on the indication message.

In summary, in the channel estimation apparatus provided in the embodiment of the present disclosure, the network device may first determine configuration information, the configuration information including a reference signal mode supported by the UE, and/or, reference signal configuration information of at least one type of reference signal corresponding to the reference signal mode supported by the UE; and the network device may send an indication message to the UE, the indication message being used to indicate the reference signal mode, and/or, being used to indicate the reference signal configuration information of at least one type of reference signal corresponding to the reference signal mode indicated by the UE; thereafter, the network device may obtain a reference signal sent by the UE; and may perform an operation corresponding to the reference signal mode indicated by the network device based on the reference signal to perform channel estimation. Therefore, the embodiments of the present disclosure provide a channel estimation method based on AI and/or ML, which can improve the channel estimation performance and ensure the accuracy and precision of the channel estimation.

Optionally, in an embodiment of the present disclosure, the reference signal mode includes at least one of the following:
a reference signal mode 1, where a reference signal corresponding to the reference signal mode 1 is used to train an artificial intelligence (AI) model and/or to train a machine learning (ML) model, where the AI model is used to implement channel estimation based on the reference signal, and the ML model is also used to implement channel estimation based on the reference signal; and
a reference signal mode 2, where a function of a reference signal corresponding to the reference signal mode 2 includes at least one of being used for training the AI model, for training the ML model, for evaluating the AI model, for evaluating the ML model, for performing channel estimation based on the AI model, and for performing channel estimation based on the ML model.

Optionally, in an embodiment of the present disclosure, the reference signal configuration information includes at least one of the following:
a reference signal pattern of the reference signal; and
a reference signal sequence of the reference signal.

Optionally, in an embodiment of the present disclosure, the obtaining module is further configured to:
obtain the indication message sent by the network device through signaling.

Optionally, in an embodiment of the present disclosure, the indication message includes at least one of the following:
first indication information used to indicate the reference signal mode indicated by the network device;
second indication information used to indicate the reference signal configuration information corresponding to the reference signal mode indicated by the network device; and
a time domain position corresponding to the reference signal configuration information indicated by the network device.

Optionally, in an embodiment of the present disclosure, the second sending module is further configured to:
send the reference signal to the network device at the time domain position based on the reference signal mode corresponding to the first indication information and/or the reference signal configuration information corresponding to the second indication information.

Optionally, in an embodiment of the present disclosure, the indication message includes at least one of the following:
first indication information used to indicate the reference signal mode indicated by the network device;
second indication information used to indicate the reference signal configuration information corresponding to the reference signal mode indicated by the network device;
a configuration period of the network device for the configuration information;
a first time domain position of the reference signal configuration information corresponding to the reference signal mode 1 within the configuration period; and
a second time domain position of the reference signal configuration information corresponding to the reference signal mode 2 within the configuration period.

Optionally, in an embodiment of the present disclosure, the second sending module is further configured to:
send the reference signal to the network device periodically according to the first time domain position, the second time domain position, and the configuration period.

FIG. 5 is a block diagram of a terminal device UE 500 provided by an embodiment of the present disclosure. For example, UE 500 may be a mobile phone, a computer, a digital broadcast terminal device, a messaging device, a gaming console, a tablet, a medical device, exercise equipment, a personal digital assistant, and the like.

Referring to FIG. 5, the UE 500 may include at least one of the following components: a processing component 502, a memory 504, a power component 506, a multimedia component 508, an audio component 510, an input/output (I/O) interface 512, a sensor component 513, and a communication component 516.

The processing component 502 typically controls overall operations of the UE 500, such as the operations associated with display, phone calls, data communications, camera operations, and recording operations. The processing component 502 may include one or more processors 520 to execute instructions to perform all or part of the steps in the above described methods. Moreover, the processing component 502 may include one or more module which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the UE 500. Examples of such data include instructions for any applications or methods operated on the UE 500, contact data, phonebook data, messages, pictures, video, etc. The memory 504 may be implemented using any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the UE 500. The power component 506 may include a power management system, one or more power sources, and any other components associated with the generation, management, and distribution of power in the UE 500.

The multimedia component 508 includes a screen providing an output interface between the UE 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a wake-up time and a pressure associated with the touch or swipe action. In some embodiments, the multimedia component 508 includes a front camera and/or a rear camera. The front camera and/or the rear camera may receive an external multimedia datum while the UE 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the UE 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 513 includes one or more sensors to provide status assessments of various aspects of the UE 500. For instance, the sensor component 513 may detect an open/closed status of the device 500, relative positioning of components, e.g., the display and the keypad, of the UE 500, a change in position of the UE 500 or a component of the UE 500, a presence or absence of user contact with the UE 500, an orientation or an acceleration/deceleration of the UE 500, and a change in temperature of the UE 500. The sensor component 513 may include a proximity sensor configured to detect the presence of nearby objects without any physical contact. The sensor component 513 may also include a light sensor, such as a CMOS or CCD image sensor, for use in imaging applications. In some embodiments, the sensor component 513 may also include an acceleration sensor, a gyroscope sensor, a magnetic sensor, a pressure sensor, or a temperature sensor.

The communication component 516 is configured to facilitate communication, wired or wirelessly, between the UE 500 and other devices. The UE 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the UE 500 may be implemented with one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the above described methods.

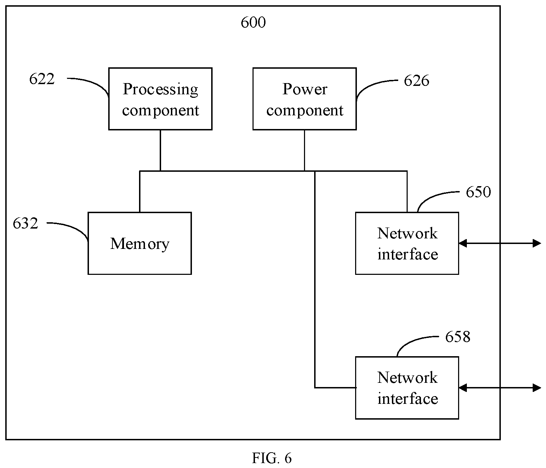

FIG. 6 is a block diagram of a network side device 600 provided in an embodiment of the present disclosure. For example, the network side device 600 may be provided as a network side device. Referring to FIG. 6, the network side device 600 includes a processing component 611, which further includes at least one processor, and a memory resource represented by a memory 632 for storing instructions, such as an application program, that may be executed by the processing component 622. The application program stored in the memory 632 may include one or more modules, each corresponding to a set of instructions. In addition, the processing component 66 is configured to execute instructions to perform any of the aforementioned methods applied to the network side device, e.g., the method shown in FIG. 1.

The network side device 600 may further include a power component 626 configured to perform power management of the network side device 600, a wired or wireless network interface 650 configured to connect the network side device 600 to the network, and an input/output (I/O) interface 658. The network side device 600 may operate based on an operating system stored in the memory 632, such as a Windows Server^{™}, a Mac OS X^{™}, a Unix^{™}, a Linux^{™}, a Free BSD^{™} or the like.

In the above-described embodiments provided in the present disclosure, the methods provided in the embodiments of the present disclosure are described from the perspectives of the network side device, and the UE, respectively. In order to implement various functions in the methods provided by the above embodiments of the present disclosure, the network side device and the UE may include hardware structures and software modules, and implement the above functions in the form of the hardware structures, the software modules, or a combination of the hardware structures and the software modules. A certain function in the above described functions may be executed in the form of the hardware structures, the software modules, or a combination of the hardware structures and the software modules.

In the above-described embodiments provided in the present disclosure, the methods provided in the embodiments of the present disclosure are described from the perspectives of the network side device, and the UE, respectively. In order to implement various functions in the methods provided by the above embodiments of the present disclosure, the network side device and the UE may include hardware structures and software modules, and implement the above functions in the form of the hardware structures, the software modules, or a combination of the hardware structures and the software modules. A certain function in the above described functions may be executed in the form of the hardware structures, the software modules, or a combination of the hardware structures and the software modules.

An embodiment of the present disclosure provides a communication apparatus. The communication apparatus may include a transceiver module and a processing module. The transceiver module may include a sending module and/or a receiving module, the sending module is used to implement a sending function, the receiving module is used to implement a receiving function, and the transceiver module may implement the sending function and/or the receiving function.

The communication apparatus may be a terminal device (such as the terminal device in the aforementioned method embodiments), or an apparatus in the terminal device, or an apparatus that may be used in conjunction with the terminal device. Alternatively, the communication apparatus may be a network device, or an apparatus in the network device, or an apparatus that may be used in conjunction with the network device.

An embodiment of the present disclosure provides another communication apparatus. The communication apparatus may be a network device, or a terminal device (such as the terminal device in the aforementioned method embodiments), or a chip, a chip system, a processor, or the like that supports the network device to implement the aforementioned methods, or a chip, a chip system, a processor, or the like that supports the terminal device to implement the aforementioned methods. The apparatus may be used to implement the method described in the aforementioned method embodiments, and the details may refer to the description in the aforementioned method embodiments.

The communication apparatus may include one or more processors. The processor may be a general-purpose processor or a specialized processor, etc. For example, it may be a baseband processor or a central processor. The baseband processor may be used to process the communication protocols as well as communication data, and the central processor may be used to control the communication apparatus (such as a network side device, a baseband chip, a terminal device, a chip of the terminal device, a DU or a CU, etc.), execute computer programs, and process the data of the computer programs.

Optionally, the communication apparatus may further include one or more memories, on which a computer program may be stored, and the processor executes the computer program so that the communication apparatus performs the method described in the above method embodiments. Optionally, data may also be stored in the memory. The communication apparatus and the memory may be provided separately or integrated together.

Optionally, the communication apparatus may further include a transceiver and an antenna. The transceiver may be referred to as a transceiver unit, a transceiver, or a transceiver circuit, etc., and is used to implement the transceiver function. The transceiver may include a receiver and a sender, the receiver may be referred to as a receiving machine or a receiving circuit, etc., and is used to implement the receiving function; the sender may be referred to as a sending machine or a sending circuit, etc., and is used to implement the sending function.

Optionally, the communication apparatus may further include one or more interface circuits. The interface circuit is used to receive code instructions and transmit them to the processor. The processor runs the code instructions to enable the communication apparatus to execute the method described in the above method embodiments.

When the communication apparatus is a terminal device (such as the terminal device in the aforementioned method embodiments), the processor is used to execute the methods shown in any one of FIGS. 1 to 4.

When the communication apparatus is a network device, the transceiver is used to execute the methods shown in any one of FIGS. 5 to 7.

In one implementation, the processor may include a transceiver for implementing the receiving and sending functions. For example, the transceiver may be a transceiver circuit, or an interface, or an interface circuit. The transceiver circuit, interface, or interface circuit for implementing the receiving and sending functions may be separate or integrated. The above-mentioned transceiver circuit, interface, or interface circuit may be used for reading and writing code/data, or the above-mentioned transceiver circuit, interface, or interface circuit may be used for transmitting or delivering signals.

In one implementation, the processor may store a computer program, which runs on the processor and enables the communication apparatus to perform the methods described in the above method embodiments. The computer program may be cured in the processor, in which case the processor may be implemented by hardware.

In one implementation, the communication apparatus may include a circuit that may implement the functions of sending, receiving, or communicating in the aforementioned method embodiments. The processor and transceiver described in the present disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be manufactured using various IC process technologies, such as a complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), a silicon germanium (SiGe), a gallium arsenide (GaAs), etc.

The communication apparatus described in the above embodiments may be a network device or a terminal device (such as the terminal device in the aforementioned method embodiments), but the scope of the communication apparatus described in the present disclosure is not limited thereto, and the structure of the communication apparatus may not be limited thereto. The communication apparatus may be an independent device or may be part of a relatively large device. For example, the communication apparatus may be:
(1) an independent integrated circuit (IC), or a chip, or a chip system or a subsystem;
(2) a collection of one or more ICs, optionally, the collection of ICs may also include a storage component for storing data or computer programs;
(3) an ASIC, such as a modem;
(4) a module that can be embedded in other device;
(5) a receiver, a terminal device, a smart terminal device, a cellular phone, a wireless device, a handheld device, a mobile unit, a vehicle-mounted device, a network device, a cloud device, an artificial intelligence device, etc.;
(6) others.

In the case where the communication apparatus may be a chip or a chip system, the chip includes a processor and an interface, where the number of the processor may be one or more, and the number of the interface may be more than one.

Optionally, the chip further includes a memory for storing necessary computer programs and data.

Those skilled in the art may also understand that the various illustrative logical blocks and steps listed in the embodiments of the present disclosure may be implemented by electronic hardware, computer software, or a combination of the two. Whether such functions are implemented by hardware or software depends on the specific application and the design requirements of the entire system. Those skilled in the art may use various methods to implement the functions described for each specific application, but such implementation should not be understood as going beyond the scope of protection of the embodiments of the present disclosure.

An embodiment of the present disclosure further provides a system for determining a duration of a sidelink, the system includes the communication apparatus acting as the terminal device (such as the first terminal device in the aforementioned method embodiments) and the communication apparatus acting as the network device in the aforementioned embodiments, or the system includes the communication apparatus acting as the terminal device (such as the first terminal device in the aforementioned method embodiments) and the communication apparatus acting as the network device in the aforementioned embodiments.

The present disclosure further provides a readable storage medium with instructions stored thereon, and the functions of any of the above method embodiments are implemented when the instructions are executed by a computer.

The present disclosure further provides a computer program product, which implements the functions of any of the above method embodiments when executed by a computer.

In the above embodiments, it may be implemented in whole or in part by software, hardware, firmware or any combination thereof. When implemented by software, it may be implemented in whole or in part in the form of a computer program product. The computer program product includes one or more computer programs. When the computer program is loaded and executed on a computer, the process or functions according to the embodiments of the present disclosure, in whole or in part, are generated. The computer may be a general-purpose computer, a special-purpose computer, a computer network, or other programmable apparatus. The computer program may be stored in a computer-readable storage medium, or transmitted from one computer-readable storage medium to another computer-readable storage medium. For example, the computer program may be transmitted from one website site, computer, server or data center by a wired (e.g., coaxial cable, optical fiber, digital subscriber line (DSL)) or wireless (e.g., infrared, wireless, microwave, etc.) manner to another website site, computer, server or data center. The computer-readable storage medium may be any available medium that may be accessed by a computer or a data storage device such as a server or data center that contains one or more available medium integrated. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)), etc.

A person of ordinary skill in the art may understand that the various numerical numbers such as "first" and "second" involved in the present disclosure are only used for distinction for convenience of description and are not used to limit the scope of the embodiments of the present disclosure as well as to indicate the order of precedence.

The term "at least one" in the present disclosure may also be described as "one or more", and the term "a plurality of' may refer to two, three, four or more, which is not limited in the present disclosure. In the embodiments of the present disclosure, for a type of technical feature, the technical features in this type of technical feature are distinguished by the terms "first", "second", "third", "A", "B", "C" and "D", etc., and there is no order of precedence or magnitude between the technical features described by the "first", "second", "third", "A", "B", "C" and "D".

Those skilled in the art will readily appreciate other embodiments of the present disclosure after considering the specification and practicing the disclosure disclosed herein. The present disclosure is intended to cover any variations, uses or adaptations of the present disclosure that follow the general principles of the present disclosure and include common knowledge or customary techniques in the art that are not disclosed in the present disclosure. The specification and the embodiments are considered exemplary only, and the true scope and spirit of the present disclosure are indicated by the appended claims.

It should be understood that the present disclosure is not limited to the exact structures that have been described above and shown in the accompanying drawings, and various modifications and changes may be made without departing from the scope thereof. The scope of the present disclosure is limited only by the appended claims.

## Claims

1. A channel estimation method, performed by a network device for uplink channel estimation, comprising:
determining configuration information, wherein the configuration information comprises a reference signal mode supported by a UE, and/or, reference signal configuration information of at least one type of reference signal corresponding to the reference signal mode supported by the UE;
sending an indication message to the UE, wherein the indication message is used to indicate a reference signal mode, and/or, is used to indicate reference signal configuration information of at least one type of reference signal corresponding to the reference signal mode indicated by the network device;
obtaining a reference signal sent by the UE; and
performing, based on the reference signal, an operation corresponding to the reference signal mode indicated by the network device to perform channel estimation.

2. The method according to claim 1, wherein the reference signal mode comprises at least one of:
a reference signal mode 1, wherein a reference signal corresponding to the reference signal mode 1 is used to train an artificial intelligence (AI) model and/or to train a machine learning (ML) model, wherein the AI model is used to implement channel estimation based on the reference signal, and the ML model is also used to implement channel estimation based on the reference signal; and
a reference signal mode 2, wherein a function of a reference signal corresponding to the reference signal mode 2 comprises at least one of being used for training the AI model, for training the ML model, for evaluating the AI model, for evaluating the ML model, for performing channel estimation based on the AI model, and for performing channel estimation based on the ML model.

3. The method according to claim 1, wherein the reference signal configuration information comprises at least one of:
a reference signal pattern of the reference signal; and
a reference signal sequence of the reference signal.

4. The method according to claim 1, wherein a method for determining the configuration information comprises at least one of:
determining the configuration information based on a protocol; and
obtaining supported configuration information sent by the UE.

5. The method according to claim 1, wherein sending the indication message to the UE comprises:
sending the indication message to the UE through a signaling.

6. The method according to claim 5, wherein the indication message comprises at least one of:
first indication information used to indicate the reference signal mode indicated by the network device;
second indication information used to indicate the reference signal configuration information corresponding to the reference signal mode indicated by the network device; and
a time domain position corresponding to the reference signal configuration information indicated by the network device.

7. The method according to claim 5, wherein the indication message comprises at least one of:
first indication information used to indicate the reference signal mode indicated by the network device;
second indication information used to indicate the reference signal configuration information corresponding to the reference signal mode indicated by the network device;
a configuration period of the UE for the configuration information;
a first time domain position of the reference signal configuration information corresponding to the reference signal mode 1 within the configuration period; and
a second time domain position of the reference signal configuration information corresponding to the reference signal mode 2 within the configuration period.

8. The method according to claim 2, wherein performing, based on the reference signal, the operation corresponding to the reference signal mode indicated by the network device comprises:
in response to that the reference signal mode indicated by the network device is the reference signal mode 1, the corresponding operation comprising: the network device training the AI model based on the reference signal, and/or, the network device training the ML model based on the reference signal;
in response to that the reference signal mode indicated by the network device is the reference signal mode 2, the corresponding operation comprising at least one of:
the network device training the AI model based on the reference signal;
the network device training the ML model based on the reference signal;
the network device performing channel estimation based on the reference signal and the AI model;
the network device performing channel estimation based on the reference signal and the ML model;
the network device evaluating the AI model based on the reference signal; and
the network device evaluating the ML model based on the reference signal.

9. A channel estimation method, performed by a terminal device (UE) for uplink channel estimation, comprising:
sending configuration information to a network device, wherein the configuration information comprises a reference signal mode supported by the UE, and/or, reference signal configuration information of at least one type of reference signal corresponding to the reference signal mode supported by the UE;
obtaining an indication message sent by the network device, wherein the indication message is used to indicate a reference signal mode, and/or, is used to indicate reference signal configuration information of at least one type of reference signal corresponding to the reference signal mode indicated by the network device; and
sending a reference signal to the network device based on the indication message.

10. The method according to claim 9, wherein the reference signal mode comprises at least one of:
a reference signal mode 1, wherein a reference signal corresponding to the reference signal mode 1 is used to train an AI model and/or to train an ML model, wherein the AI model is used to implement channel estimation based on the reference signal, and the ML model is also used to implement channel estimation based on the reference signal; and
a reference signal mode 2, wherein a function of a reference signal corresponding to the reference signal mode 2 comprises at least one of being used for training the AI model, for training the ML model, for evaluating the AI model, for evaluating the ML model, for performing channel estimation based on the AI model, and for performing channel estimation based on the ML model.

11. The method according to claim 9, wherein the reference signal configuration information comprises at least one of:
a reference signal pattern of the reference signal; and
a reference signal sequence of the reference signal.

12. The method according to claim 9, wherein obtaining the indication message sent by the network device comprises:
obtaining the indication message sent by the network device through a signaling.

13. The method according to claim 12, wherein the indication message comprises at least one of:
first indication information used to indicate the reference signal mode indicated by the network device;
second indication information used to indicate the reference signal configuration information corresponding to the reference signal mode indicated by the network device; and
a time domain position corresponding to the reference signal configuration information indicated by the network device.

14. The method according to claim 13, wherein sending the reference signal to the network device based on the indication message comprises:
sending the reference signal to the network device at the time domain position based on the reference signal mode corresponding to the first indication information and/or the reference signal configuration information corresponding to the second indication information.

15. The method according to claim 12, wherein the indication message comprises at least one of:
first indication information used to indicate the reference signal mode indicated by the network device;
second indication information used to indicate the reference signal configuration information corresponding to the reference signal mode indicated by the network device;
a configuration period of the network device for the configuration information;
a first time domain position of the reference signal configuration information corresponding to the reference signal mode 1 within the configuration period; and
a second time domain position of the reference signal configuration information corresponding to the reference signal mode 2 within the configuration period.

16. The method according to claim 15, wherein sending the reference signal to the network device based on the indication message comprises:
sending the reference signal to the network device periodically according to the first time domain position, the second time domain position, and the configuration period.

17. A channel estimation apparatus, comprising:
a determination module, configured to determine configuration information, wherein the configuration information comprises a reference signal mode supported by a UE, and/or, reference signal configuration information of at least one type of reference signal corresponding to the reference signal mode supported by the UE;
a sending module, configured to send an indication message to the UE, wherein the indication message is used to indicate a reference signal mode, and/or, is used to indicate reference signal configuration information of at least one type of reference signal corresponding to the reference signal mode indicated by the network device;
an obtaining module, configured to obtain a reference signal sent by the UE; and
a processing module, configured to perform an operation corresponding to the reference signal mode indicated by the network device based on the reference signal to perform channel estimation.

18. A channel estimation apparatus, comprising:
a first sending module, configured to send configuration information to a network device, wherein the configuration information comprises a reference signal mode supported by the UE, and/or, reference signal configuration information of at least one type of reference signal corresponding to the reference signal mode supported by the UE;
an obtaining module, configured to obtain an indication message sent by the network device, wherein the indication message is used to indicate a reference signal mode, and/or, is used to indicate reference signal configuration information of at least one type of reference signal corresponding to the reference signal mode indicated by the network device; and
a second sending module, configured to send a reference signal to the network device based on the indication message.

19. A communication apparatus, wherein the apparatus comprises a processor and a memory, wherein a computer program is stored in the memory and the processor executes the computer program stored in the memory so that the apparatus performs the method according to any one of claims 1 to 8.

20. A communication apparatus, wherein the apparatus comprises a processor and a memory, wherein a computer program is stored in the memory and the processor executes the computer program stored in the memory so that the apparatus performs the method according to any one of claims 9 to 16.

21. A communication apparatus, comprising: a processor and an interface circuit, wherein
the interface circuit is configured to receive code instructions and transmit the code instructions to the processor; and
the processor is configured to run the code instructions to perform the method according to any one of claims 1 to 8.

22. A communication apparatus, comprising: a processor and an interface circuit, wherein
the interface circuit is configured to receive code instructions and transmit the code instructions to the processor; and
the processor is configured to run the code instructions to perform the method according to any one of claims 9 to 16.

23. A computer readable storage medium, with instructions stored thereon, for implementing the method according to any one of claims 1 to 8 when the instructions are executed.

24. A computer readable storage medium, with instructions stored thereon, for implementing the method according to any one of claims 9 to 16 when the instructions are executed.
